# EUROPÄISCHE PATENTANMELDUNG

(11) **EP 2 236 269 A1**
(43) Veröffentlichungstag der Anmeldung: **06.10.2010**
(21) Anmeldenummer: 09157094.5
(22) Anmeldetag: 01.04.2009
(51) Int. Cl.: B29C 59/00, B29C 31/00

(54) **Aufnahmewerkzeug und Verfahren zur Bearbeitung von Formteilen**

(71) Anmelder: GEISS Aktiengesellschaft, 96145 Sesslach (DE)
(72) Erfinder: Geiss, Manfred, 96145 Seßlach (DE)
(74) Vertreter: Peckmann, Ralf

(57) **Zusammenfassung**

Die vorliegende Erfindung schafft ein Aufnahmewerkzeug (100) zur wahlweisen Aufnahme eines ersten (200) und zweiten (300) Formteils, mit einer ersten Formmulde (110) zur Aufnahme des ersten Formteils (200) und einer zweiten Formmulde (120) zur Aufnahme des zweiten Formteils (300). Eie erste (110) und zweite (120) Formmulde durchdringen einander teilweise in einem Durchdringungsbereich (102). Unter weiteren Gesichtspunkten werden eine Vorrichtung zur Bearbeitung eines ersten (200) und zweiten (300) Formteils mit einem derartigen Aufnahmewerkzeug und ein Verfahren zur Bearbeitung eines ersten (200) und zweiten (300) Formteils geschaffen. Gemäß dem Verfahren wird das erste Formteil (200) in der ersten Formmulde (110) aufgenommen und in einem ersten Anlegebereich (111) der ersten Formmulde (110) bearbeitet, in dem das erste Formteil (200) flächig anliegt. Nach Entnehmen des ersten Formteils (200), um den Durchdringungsbereich (102) freizugeben, wird das zweite Formteil (300) in der zweiten Formmulde (120) aufgenommen und in einem ersten Anlegebereich (121) der zweiten Formmulde (120) bearbeitet, in dem das zweite Formteil (300) flächig anliegt.

## Beschreibung

Die vorliegende Erfindung bezieht sich auf ein Aufnahmewerkzeug, eine Vorrichtung und ein Verfahren zur Bearbeitung von Formteilen, insbesondere von Häuten von Innenverkleidungsbauteilen von Kraftfahrzeugen.

Obwohl auf beliebige Formteile anwendbar, werden die vorliegende Erfindung sowie die ihr zugrunde liegende Problematik in Bezug auf Formteile im Kraftfahrzeugbereich und insbesondere auf Formteile näher erläutert, welche als eine Schwächungslinie aufweisende Haut eines Innenverkleidungsbauteils eines Kraftfahrzeugs dienen.

Bei Kraftfahrzeugen ist der Schutz von Insassen bei einem Aufprall durch Airbag-Systeme Standard. Dabei ist es üblich, dass beispielsweise vor dem Beifahrer in das Armaturenbrett bzw. die Instrumententafel eine Aussparung eingebracht wird, in welche die Einrichtung für den Airbag eingebracht ist. Gleichermaßen ist es mittlerweile gängig, derartige Airbag-Systeme in die A-, B- und/oder C-Säulen des Kraftfahrzeuges als Kopfairbag-Systeme zu integrieren. Aus optischen Gründen ist es dabei üblich, diese Airbag-Einrichtungen unsichtbar anzubringen. Für den Beifahrer-Airbag beispielsweise wird hierzu im Bereich der die Airbag-Einrichtung tragenden Instrumententafel von der Rückseite her eine Materialschwächung vorgenommen, die ausreicht, bei einem Unfall ein Aufreißen der Sichtfläche entlang der Materialschwächung und folglich ein Freigeben des Airbags zu gewährleisten.

Bisher wird bei der Herstellung einer Haut eines Innenverkleidungsbauteils mit integrierter Schwächungslinie als Airbag-Sollbruchstelle gemäß einem der Anmelderin intern bekannten Stand der Technik wie folgt vorgegangen. Zunächst wird mittels eines Sprühverfahrens ein geeignetes Sprühmaterial in eine zugeordnete Negativform gesprüht und ausgehärtet. Hierdurch entsteht ein an die geometrische Form der Negativform angepasstes Formteil. Dieses Formteil wird anschließend der Negativform entnommen, aus der Sprühvorrichtung herausgeführt und zum Einbringen der Schwächungslinie in ein entsprechendes Aufnahmewerkzeug einer örtlich getrennten Bearbeitungsmaschine überführt. Dies ist erforderlich, da die Bearbeitungsmaschine zum Einbringen der Schwächungslinie bewegliche Bauteile aufweist, die im Falle eines Kontaktes mit dem Sprühmaterial während des Sprühvorgangs beschädigt und in ihrer Funktionsweise gestört werden könnten. Das Sprühmaterial ist im Allgemeinen ein thermoplastisches, klebriges Sprühmaterial, das in unerwünschter Weise an den einzelnen Bauteilen anhaften würde und schwerlich zu entfernen wäre.

Nachfolgend wird mittels der Bearbeitungsmaschine eine vorbestimmte Schwächungslinie in das überführte und in das Aufnahmewerkzeug eingesetzte Formteil eingebracht. Um die Schwächungslinie mit hinreichender Genauigkeit ausbilden zu können, ist das Aufnahmewerkzeug ähnlich dem Negativwerkzeug der geometrischen Form des Formteils angepasst, sodass das Formteil durch flächige Abstützung im Aufnahmewerkzeug zu Beginn der Bearbeitung in präziser Lage gehalten und auch während der Bearbeitung vor Verformung oder Verrutschen bewahrt wird.

Bei diesem Ansatz sind jedoch zur Herstellung unterschiedlich geformter Typen von Formteilen pro Typ zwei der Form des Formteils angepasste Werkzeuge erforderlich - die in der Sprühvorrichtung verwendete Negativform und das in der Bearbeitungsmaschine verwendete Aufnahmewerkzeug.

Sollen in einer Produktionsanlage nach Bedarf unterschiedlich geformte Formteile hergestellt werden, ist es gängig, bei jedem Wechsel der Negativform auch die Bearbeitungsmaschine auf ein anderes Aufnahmewerkzeug umzurüsten. Dies ist zeit- und kostenaufwändig und vergrößert Streuungstoleranzen, da bei jedem Umrüsten die Position des Aufnahmewerkzeugs neu zu justieren ist. Eine alternative Möglichkeit, eine Bearbeitungsmaschine mit ausreichend großem Maschinenarbeitsraum für mehrere Aufnahmewerkzeuge bereitzustellen, führt zu erhöhtem Flächenbedarf und erhöhten Investitionskosten für die Maschine selbst sowie zu verringerter Maschinengenauigkeit z.B. aufgrund von Wärmedehnung des vergrößerten Maschinenarbeitsraumes.

Der vorliegenden Erfindung liegt somit die Aufgabe zugrunde, die Herstellung unterschiedlich geformter Formteile, die eine Schwächungslinie oder ein anderes, durch Nachbearbeitung in einem Aufnahmewerkzeug erzeugbares Merkmal aufweisen, auf einfache und kostengünstige Weise zu ermöglichen, insbesondere ohne dass die Eigenschaften der hergestellten Formteile negativ beeinflusst werden.

Diese Aufgabe wird erfindungsgemäß durch das Aufnahmewerkzeug mit den Merkmalen des Patentanspruchs 1, die Vorrichtung mit den Merkmalen des Patentanspruchs 8 und das Verfahren mit den Merkmalen des Patentanspruchs 11 gelöst.

Die der vorliegenden Erfindung zugrundeliegende Idee besteht darin, ein Aufnahmewerkzeug zur wahlweisen Aufnahme eines ersten und zweiten Formteils zu schaffen. Das Aufnahmewerkzeug weist eine erste Formmulde zur Aufnahme des ersten Formteils und eine zweite Formmulde zur Aufnahme des zweiten Formteils auf. Die erste und die zweite Formmulde durchdringen einander teilweise in einem Durchdringungsbereich.

Die vorliegende Erfindung ermöglicht gegenüber dem oben erläuterten Stand der Technik vorteilhaft, ein und dasselbe Aufnahmewerkzeug sowohl für die Bearbeitung des ersten als auch des zweiten Formteils zu verwenden, ohne dass das erste und zweite Formteil gleich geformt sein müssen. Da das Aufnahmewerkzeug zur Aufnahme des ersten Formteils die erste Formmulde und zur Aufnahme des zweiten Formteils die zweite Formmulde aufweist, wird ermöglicht, die erste und zweite Formmulde entsprechend abweichenden Formen des ersten und zweiten Formteils unterschiedlich auszubilden.

Auf diese Weise kann in einer Produktionsanlage je nach Bedarf entweder das erste oder das zweite Formteil hergestellt und als Teil des Herstellungsvorgangs entsprechend entweder in der ersten oder in der zweiten Formmulde des Aufnahmewerkzeugs aufgenommen und unter formangepasster Abstützung in der jeweiligen Formmulde von einer Bearbeitungseinrichtung bearbeitet werden, z.B. durch Einbringen einer Schwächungslinie oder eines anderen gewünschten Merkmals. Hierbei fallen keine Kosten und Stillstandzeiten für eine Umrüstung der Bearbeitungseinrichtung mit unterschiedlichen Aufnahmewerkzeugen an.

Da das Aufnahmewerkzeug den Durchdringungsbereich aufweist, in welchem die erste und zweite Formmulde sich durchdringen, ist der Durchdringungsbereich zugleich Teil der ersten als auch Teil der zweiten Formmulde. Daher ist der gesamte von beiden, einander durchdringenden Formmulden benötigte Flächenbedarf geringer als Summe der Fläche, die in einem herkömmlichen Aufnahmewerkzeug für eine Formmulde zur Aufnahme des ersten Formteils benötigt würde, und der Fläche, die in einem herkömmlichen Aufnahmewerkzeug für eine Formmulde zur Aufnahme des zweiten Formteils benötigt würde. Dass die Formmulden sich nur teilweise durchdringen, d.h. der Durchdringungsbereich nicht die Gesamtfläche der ersten und zweiten Formmulde umfasst, ermöglicht es, die erste und zweite Formmulde insbesondere in ihren nicht zum Durchdringungsbereich gehörenden Abschnitten jeweils formangepasst zur Aufnahme des ersten bzw. zweiten Formteils auszubilden.

Das erfindungsgemäße Aufnahmewerkzeug benötigt aufgrund der gegenseitigen Durchdringung der Formmulden eine geringere Fläche in der Bearbeitungsmaschine, als zur Aufstellung zweier herkömmlicher Aufnahmewerkzeuge nebeneinander oder auch zur Aufstellung eines Aufnahmewerkzeugs mit zwei nebeneinander angeordneten Formmulden erforderlich wäre. Dies ermöglicht, den Maschinenraum der Bearbeitungsmaschine relativ klein auszubilden, sodass einerseits eine hohe Maschinengenauigkeit gewährleistet wird und andererseits Investitionskosten für die Barbeitungsmaschine und das Gebäude, in dem sie sich befindet, gering gehalten werden.

Gemäß dem erfinderischen Verfahren wird zunächst ein Aufnahmewerkzeug mit einer ersten und zweiten Formmulde bereitgestellt, die einander in einem Durchdringungsbereich teilweise durchdringen. Das erste Formteil wird in der ersten Formmulde aufgenommen und in einem ersten Anlegebereich der ersten Formmulde bearbeitet, in dem das erste Formteil flächig anliegt. Sodann wird das erste Formteil aus der ersten Formmulde entnommen, sodass der Durchdringungsbereich, der sowohl von der ersten als auch von der zweiten Formmulde mit umfasst ist, freigegeben wird. Anschließend wird das zweite Formteil in die zweite Formmulde eingelegt und in einem zweiten Anlegebereich, der sich in der zweiten Formmulde befindet und in welchem das zweite Formteil flächig anliegt, bearbeitet.

In abhängigen Ansprüchen finden sich vorteilhafte Ausgestaltungen und Verbesserungen.

Gemäß einer bevorzugten Weiterbildung des Aufnahmewerkzeugs weist die erste Formmulde einen ersten Anlegebereich zur flächigen Anlage des ersten Formteils auf. Dies ermöglicht, das erste Formteil mit besonders hoher Präzision zu bearbeiten, indem es während der Bearbeitung durch flächige Anlage im Anlegebereich durch die erste Formmulde in der gewünschten Lage und Form gehalten wird, und zwar insbesondere dann, wenn auch die Bearbeitung innerhalb des ersten Anlegebereichs erfolgt. Vorzugsweise befindet sich der erste Anlegebereich außerhalb des Durchdringungsbereichs, da hier die Formgebung der ersten Formmulde optimal zur Abstützung des ersten Formteils ausführbar ist.

Gemäß einer bevorzugten Weiterbildung weist die erste Formmulde weiterhin einen zweiten Anlegebereich zur flächigen Anlage des ersten Formteils auf, wobei der erste und der zweite Anlegebereich der ersten Formmulde auf gegenüberliegenden Seiten des Durchdringungsbereichs ausgebildet sind. Wird das erste Formteil in die erste Formmulde eingelegt, erstreckt es sich somit vom ersten Anlegebereich, in dem es besonders sicher gehalten ist, durch den Durchdringungsbereich hindurch in den zweiten Anlegebereich, in dem es ebenfalls besonders sicher gehalten ist. Damit ist es ähnlich einer Brücke zu beiden Seiten des Durchdringungsbereichs flächig abgestützt und so insgesamt besonders stabil und präzise in der ersten Formmulde aufgenommen.

Gemäß einer bevorzugten Weiterbildung erstreckt sich die erste Formmulde in einer ersten Raumrichtung, während die zweite Formmulde sich in die erste Formmulde im Durchdringungsbereich kreuzender Weise in einer zweiten Raumrichtung erstreckt. Dies ermöglicht, sowohl das erste als auch das zweite Formteil in der zugehörigen Formmulde besonders sicher zu halten, da jede der Formmulden jeweils zwei nicht zum Durchdringungsbereich gehörige Abstützbereiche aufweist, die den Durchdringungsbereich zwischen sich einschließen. Dadurch, die Formgebung in den außerhalb des Durchdringungsbereichs liegenden Abstützbereichen optimal zur Abstützung des jeweiligen Formteils ausführbar ist, ist das jeweilige Formteil zu beiden Seiten des Durchdringungsbereichs besonders sicher abgestützt, sodass es den Durchdringungsbereich überbrückt. Beide Formteile sind damit in der jeweiligen Formmulde insgesamt und unabhängig vom Grad eventueller zusätzlicher Abstützung im Durchdringungsbereich besonders stabil und präzise gehalten.

Gemäß einer bevorzugten Weiterbildung sind die erste und die zweite Formmulde unterschiedlich geformt. So können mittels des Aufnahmewerkzeugs unterschiedlich geformte Formteile je nach Bedarf in beliebiger Abfolge bearbeitet werden, oder auch gleich geformte Formteile je nach Bedarf unter Verwendung der ersten bzw. zweiten Formmulde in unterschiedlicher Lage bearbeitet werden. Vorzugsweise sind die erste und die zweite Formmulde zueinander spiegelsymmetrisch geformt. Dies ermöglicht, zueinander spiegelsymmetrische Formteile, z.B. einander entsprechende Innenverkleidungsbauteile von links- und rechtsgelenkten Kraftfahrzeugen je nach Bedarf in beliebiger Reihenfolge zu bearbeiten.

Gemäß einer bevorzugten Weiterbildung ist das erste und/oder zweite Formteil als Innenverkleidungsbauteil oder als Haut eines Innenverkleidungsbauteils eines Kraftfahrzeugs ausgebildet, wobei das Innenverkleidungsbauteil insbesondere eine Instrumententafel, ein Handschuhfach, oder einer Verkleidung einer A-, B- oder C-Säule eines Kraftfahrzeugs ist. Das Innenverkleidungsbauteil kann bereits verstärkt sein, d.h. eine mit Verstärkungen versehene Haut aufweisen. Es ist allerdings für einen Fachmann offensichtlich, dass das vorliegende Aufnahmewerkzeug auch zum Bearbeiten eines anderen nicht explizit angegebenen Formteils geeignet ist. Vorzugsweise ist das erste Formteil als Innenverkleidungsbauteil oder Haut eines Innenverkleidungsbauteils eines rechtsgelenkten Kraftfahrzeugs und das zweite Formteil als Innenverkleidungsbauteil oder Haut eines Innenverkleidungsbauteils eines linksgelenkten Kraftfahrzeugs ausgebildet. So kann vorteilhaft wechselndem Bedarf an Kraftfahrzeugen für Gebiete mit Links- und Rechtsverkehr entsprochen werden.

Gemäß einer bevorzugten Weiterbildung wird eine Vorrichtung zur Bearbeitung eines ersten und zweiten Formteils geschaffen, die ein wie oben beschriebenes Aufnahmewerkzeug und eine Bearbeitungseinrichtung zum Einbringen einer vorbestimmten Schwächungslinie in das erste und/oder zweite Formteil im Aufnahmewerkzeug aufweist. Die Bearbeitungseinrichtung ist beispielsweise als Bestandteil einer CNC-Bearbeitungsmaschine, insbesondere einer 3- bis 6-achsige CNC-Bearbeitungsmaschine, ausgebildet. Hierdurch wird das genaue und mit einer geringen Toleranz behaftete Einbringen der vorbestimmten Schwächungslinie in das Formteil gewährleistet. Insbesondere weist die Bearbeitungseinrichtung eine CNC-gesteuerte Schneidklinge oder einen CNC-gesteuerten Fräskopf zum Einbringen der vorbestimmten Schwächungslinie auf. Dies ist in Abhängigkeit des jeweiligen Anwendungsfalls und der Art und geometrischen Form der jeweiligen Schwächungslinie auszuwählen. Vorzugsweise, jedoch nicht einschränkend dient die Schwächungslinie als Sollbruchstelle für einen vom Formteil aufzunehmenden Airbag.

Gemäß einer bevorzugten Weiterbildung ist die Bearbeitungseinrichtung ausgelegt, die Schwächungslinie in einem vorbestimmten Abstand zu einer Außenfläche des ersten Formteils einzubringen, die im ersten Anlegebereich der ersten Formmulde anliegt. Durch die flächige Abstützung des Formteils im ersten Anlegebereich kann der vorbestimmte Abstand besonders genau eingehalten werden, wenn auch die Bearbeitung in diesem Bereich erfolgt.

Die Erfindung wird im Folgenden anhand von Ausführungsbeispielen unter Bezugnahme auf die beiliegenden Figuren der Zeichnung näher erläutert.

### Von den Figuren zeigen:

Fig. 1 eine schematische Perspektivansicht eines Aufnahmewerkzeugs gemäß einem Ausführungsbeispiel der vorliegenden Erfindung; und
Fig. 2A-D schematische Draufsichten auf das Aufnahmewerkzeug aus Fig. 1 bei der Anwendung in einem Verfahren, gemäß einem Ausführungsbeispiel, zur Bearbeitung eines ersten und zweiten Formteils.

In den Figuren der zeichnung bezeichnen gleiche Bezugszeichen dieselben oder funktionsgleiche Komponenten, soweit nichts Gegenteiliges angegeben ist.

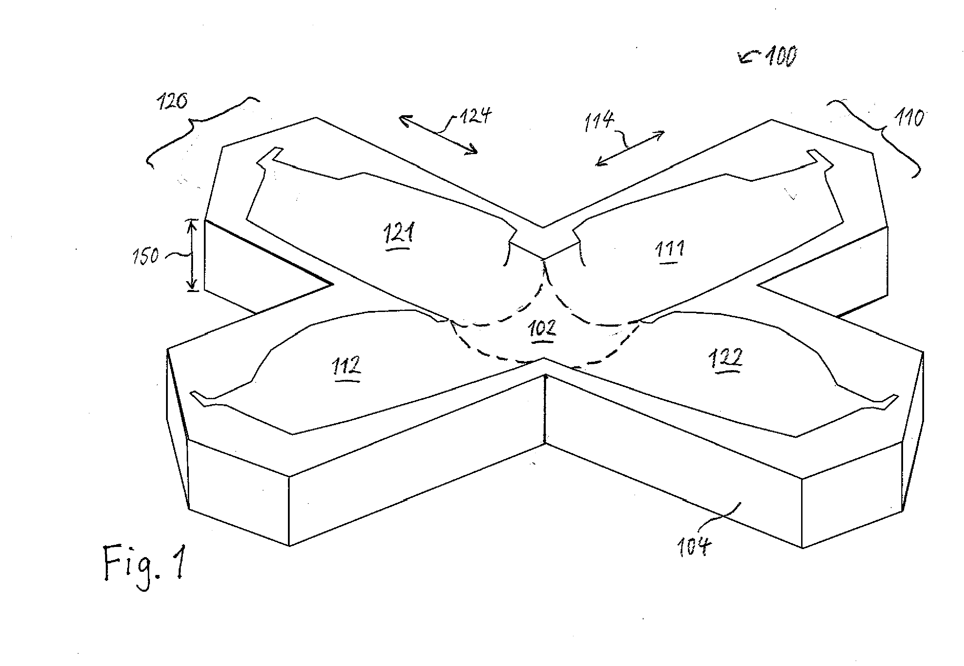

Figur 1 zeigt in perspektivischer Ansicht schräg von oben ein Aufnahmewerkzeug 100 zur Aufnahme und formangepassten Abstützung von Formteilen bei der Bearbeitung zum Einbringen von schwächungslinien für Airbags. Das hier gezeigte Aufnahmewerkzeug ist beispielhaft zur Aufnahme von Formteilen ausgebildet, die Häute für Instrumententafeln von Kraftfahrzeugen sind.

Das Aufnahmewerkzeug 100 umfasst einen Block 104, z.B. aus Aluminium oder einem anderen geeigneten Werkstoff hinreichender Festigkeit gefertigt, mit einer konstanten äußeren Höhenabmessung 150 und einem in der Darstellung von oben gesehen wesentlich kreuzförmigen äußeren Umriss. Je ein Kreuzarm des kreuzförmigen Umrisses erstreckt sich in einer ersten Raumrichtung 114 und in einer zweiten Raumrichtung 124, die beide in der Waagerechten liegen.

Im Block 124 sind eine erste Formmulde 110 und eine zweite Formmulde 120 ausgebildet, die sich nach oben hin öffnen. Die erste Formmulde 110 erstreckt sich entlang der ersten Raumrichtung 114 wesentlich über die Länge des in der ersten Raumrichtung 114 verlaufenden Kreuzarms des Aufnahmewerkzeugs 100, während die zweite Formmulde 120 sich entlang der zweiten Raumrichtung 124 wesentlich über die Länge des in der zweiten Raumrichtung 124 verlaufenden Kreuzarms erstreckt. Im Bereich der Kreuzung der beiden Kreuzarme kreuzen sich auch die erste 110 und zweite 120 Formmulde, indem sie sich in einem Durchdringungsbereich 102 gegenseitig durchdringen. Der Durchdringungsbereich 102 ist sowohl Teil der ersten Formmulde 110 als auch Teil der zweiten Formmulde 120.

Die erste Formmulde 110 umfasst außer dem Durchdringungsbereich 102 einen ersten Anlegebereich 111 und einen zweiten Anlegebereich 112 der ersten Formmulde 110, die an gegenüberliegenden Seiten des Durchdringungsbereichs 102 angeordnet sind, sodass sich die erste Formmulde 110 von ihrem ersten Anlegebereich 111 in der ersten Raumrichtung 114 über den Durchdringungsbereich 102 bis zu ihrem zweiten Anlegebereich 112 erstreckt. Analog umfasst die zweite Formmulde 120 außer dem Durchdringungsbereich 102 einen ersten Anlegebereich 121 und einen zweiten Anlegebereich 122 der zweiten Formmulde, die ebenfalls an gegenüberliegenden Seiten des Durchdringungsbereichs 102 angeordnet sind. Damit erstreckt sich die zweite Formmulde 120 von ihrem ersten Anlegebereich 121 in der ersten Raumrichtung 124 über den Durchdringungsbereich 102 bis zu ihrem zweiten Anlegebereich 122.

Die erste Formmulde 110 ist zur Aufnahme eines ersten Formteils ausgebildet, bei dem es sich im hier gezeigten Beispiel um die Haut einer Instrumententafel eines linksgelenkten, für Rechtsverkehr geeigneten Kraftfahrzeugs handelt. Hierbei ist der erste Anlegebereich 111 der ersten Formmulde 110 in der Art einer Negativform entsprechend der äußeren Oberfläche der Instrumententafel im Beifahrerbereich geformt, d.h. dem im Kraftfahrzeug vor dem Beifahrersitz auf der rechten Seite anzuordnenden Abschnitt der Instrumententafel. Der zweite Anlegebereich 112 der ersten Formmulde 110 ist entsprechend in Art einer Negativform der äußeren Oberfläche der Instrumententafel im Fahrerbereich geformt.

Die zweite Formmulde 120 ist zur Aufnahme eines zweiten Formteils ausgebildet, bei dem es sich im hier gezeigten Beispiel um die Haut einer Instrumententafel eines rechtsgelenkten, für Linksverkehr geeigneten Kraftfahrzeugs handelt. Hier ist der erste Anlegebereich 121 der zweiten Formmulde 120 in Art einer Negativform entsprechend der äußeren Oberfläche der Instrumententafel im Beifahrerbereich geformt, d.h. dem im Kraftfahrzeug vor dem Beifahrersitz auf der in diesem Fall linken Seite anzuordnenden Abschnitt der Instrumententafel. Der zweite Anlegebereich 122 der zweiten Formmulde 120 ist in Art einer Negativform der äußeren Oberfläche der Instrumententafel im Fahrerbereich ausgebildet, d.h. dem im Kraftfahrzeug vor dem Fahrersitz auf der in diesem Fall rechten Seite anzuordnenden Abschnitt der Instrumententafel. Beispielsweise ist das zweite Formteil für die Instrumententafel einer rechtsgelenkten Variante desselben Kraftfahrzeugtyps bestimmt, für dessen linksgelenkte Variante das erste Formteil bestimmt ist. In diesem Fall können das erste und zweite Formteil und entsprechend die erste 110 und zweite 120 Formmulde wesentlich oder exakt spiegelbildlich zueinander ausgebildet sein.

Der Durchdringungsbereich 102 ist so geformt, dass bei Aufnahme des ersten Formteils in der ersten Formmulde 110 ein mittlerer Abschnitt des ersten Formteils, und bei Aufnahme des zweiten Formteils in der zweiten Formmulde 120 ein mittlerer Abschnitt des zweiten Formteils im Durchdringungsbereich 102 aufnehmbar ist. Im vorliegenden Fall handelt es sich jeweils um einen im Kraftfahrzeug im Bereich einer Mittelkonsole zwischen Fahrer- und Beifahrersitz anzuordnenden Abschnitt der jeweiligen Instrumententafel. Beispielsweise ist der Durchdringungsbereich 102 wesentlich entsprechend einer geometrischen Überlagerung der äußeren Formen des ersten und zweiten Formteils geformt.

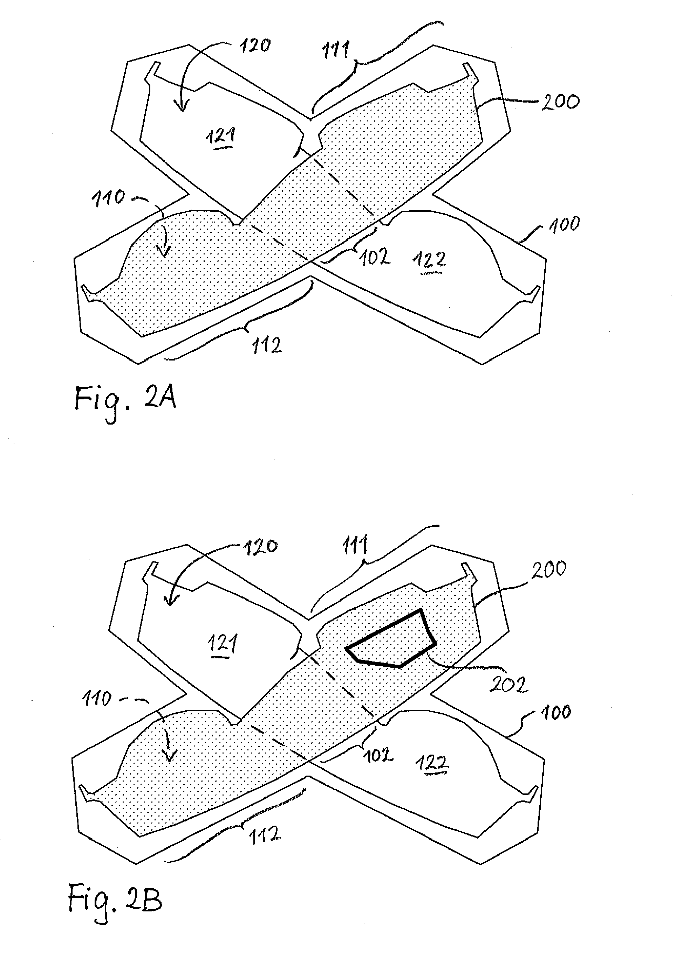

In den Figuren 2A-D ist schematisch die Verwendung des Aufnahmewerkzeugs 100 aus Fig. 1 in einem Herstellungsverfahren für Häute von Instrumententafeln dargestellt, die eine Schwächungslinie 202 an der Stelle einer Airbagabdeckung aufweisen. Entsprechende Formteile für Instrumententafeln ohne Schwächungslinien werden beispielsweise mit einer Wanddicke von 1 mm mittels eines Sprühverfahrens hergestellt.

In Fig. 2A wurde ein erstes Formteil 200, bei dem es sich um eine z.B. mittels eines Sprühverfahrens herstellte Haut einer Instrumententafel eines linksgelenkten Kraftfahrzeugs handelt, in der ersten Formmulde 110 aufgenommen, wobei die Außenseite der Haut zum Aufnahmewerkzeug 100, d.h. vom Betrachter weg weist. Im gezeigten Zustand ist ein im eingebauten Zustand vor dem Beifahrersitz zu liegen kommender Abschnitt der Instrumententafelhaut 200 im ersten Anlegeabschnitt 111 angeordnet und wird durch diesen flächig abgestützt. Ein weiterer, im eingebauten Zustand vor dem Fahrersitz zu liegen kommender Abschnitt der Instrumententafelhaut 200 ist im zweiten Anlegeabschnitt 112 angeordnet und von diesem flächig abgestützt. Ein mittlerer Abschnitt der Instrumententafelhaut 200 ist im Durchdringungsbereich 102 angeordnet.

In Fig. 2B wurde in dem durch den ersten Anlegebereich 111 flächig abgestützten Bereich der Instrumententafelhaut eine Schwächungslinie 202 eingebracht, die die Begrenzung einer Beifahrerairbagabdeckung markiert. Hierzu wurde mit Hilfe einer nicht gezeigten Bearbeitungseinrichtung die Wanddicke reduziert, z.B. durch Ultraschallschneiden oder Fräsen, während die Instrumententafelhaut 200 vom Aufnahmewerkzeug 100 an der Bearbeitungsstelle hochpräzise in Position gehalten wurde, sodass beispielsweise die Schwächungslinie 202 mit einer Restwanddicke von 0,5 mm erzeugt und eine optimierte Toleranz der Größenordnung +/- 0,03 mm eingehalten werden konnte.

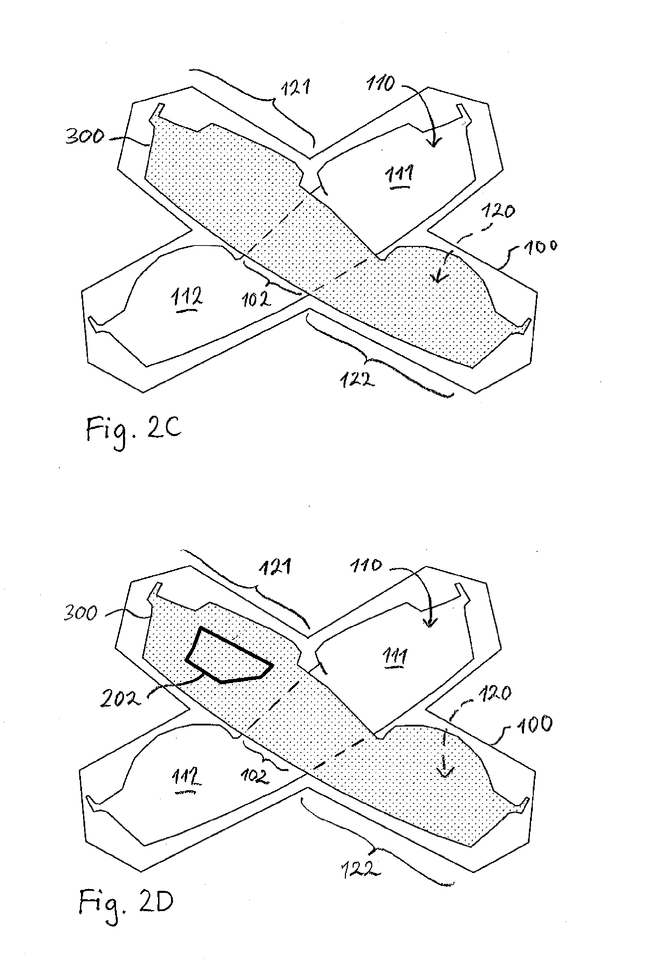

In Fig. 2C wurde das erste Formteil 200 aus der ersten Formmulde 110 entfernt und stattdessen ein zweites Formteil 300 in der zweiten Formmulde 120 aufgenommen, bei dem es sich um eine z.B. ebenfalls mittels eines Sprühverfahrens in einer entsprechenden Negativform herstellte Haut einer Instrumententafel eines rechtsgelenkten Kraftfahrzeugs handelt. Im gezeigten Zustand ist ein im eingebauten Zustand vor dem Beifahrersitz zu liegen kommender Abschnitt des zweiten Formteils 300 im ersten Anlegeabschnitt 121 der zweiten Formmulde 120 angeordnet und wird durch diesen flächig abgestützt. Ein weiterer, im eingebauten Zustand vor dem Fahrersitz zu liegen kommender Abschnitt des zweiten Formteils 300 ist im zweiten Anlegeabschnitt 122 der zweiten Formmulde 120 angeordnet und von diesem flächig abgestützt. Ein mittlerer Abschnitt des dritten Formteils 300 ist im Durchdringungsbereich 102 angeordnet.

In Fig. 2D wurde in dem durch den ersten Anlegebereich 121 der zweiten Formmulde 120 flächig abgestützten Bereich des zweiten Formteils 300, d.h. der Instrumententafelhaut wiederum hochpräzise eine Schwächungslinie 202 eingebracht, während das zweite Formteil 300 vom Aufnahmewerkzeug 100 an der Bearbeitungsstelle im ersten Anlegebereich 121 in Position gehalten wurde.

Obwohl die vorliegende Erfindung anhand bevorzugter Ausführungsbeispiele vorstehend beschrieben wurde, ist sie darauf nicht beschränkt, sondern auf vielfältige Weise modifizierbar.

Insbesondere können die Formmulden nicht nur nach oben, sondern auch zu anderen Raumrichtungen hin geöffnet sein. Auch ist der Begriff "Formmulde" nicht auf konkave Formationen beschränkt, sondern kann konkave und/oder konvexe Formationen beinhalten. Das Aufnahmewerkzeug kann mehr als zwei Formmulden aufweisen, die sich z.B. paarweise in entsprechenden Durchdringungsbereichen oder in einem gemeinsamen Durchdringungsbereich durchdringen.

### Bezugszeichenliste

- 100: Aufnahmewerkzeug
- 102: Durchdringungsbereich
- 104: Muldenblock
- 110: erste Formmulde
- 111, 112: Anlegebereiche der ersten Formmulde
- 120: zweite Formmulde
- 121, 122: Anlegebereiche der zweiten Formmulde
- 200: erstes Formteil
- 202: Schwächungslinie
- 300: zweites Formteil

## Patentansprüche

1. Aufnahmewerkzeug (100) zur wahlweisen Aufnahme eines ersten (200) und zweiten (300) Formteils, mit einer ersten Formmulde (110) zur Aufnahme des ersten Formteils (200) und einer zweiten Formmulde (120) zur Aufnahme des zweiten Formteils (300), wobei die erste (110) und zweite (120) Formmulde einander in einem Durchdringungsbereich (102) teilweise durchdringen.

2. Aufnahmewerkzeug (100) nach Anspruch 1, **dadurch gekennzeichnet, dass** die erste Formmulde (110) einen ersten Anlegebereich (111) zur flächigen Anlage des ersten Formteils (110) insbesondere außerhalb des Durchdringungsbereichs (102) aufweist.

3. Aufnahmewerkzeug (100) nach Anspruch 2, **dadurch gekennzeichnet, dass** die erste Formmulde (110) weiterhin einen zweiten Anlegebereich (112) zur flächigen Anlage des ersten Formteils (110) aufweist, wobei der erste (111) und der zweite (112) Anlegebereich der ersten Formmulde (110) auf gegenüberliegenden Seiten des Durchdringungsbereichs (102) ausgebildet sind.

4. Aufnahmewerkzeug (100) nach einem der vorhergehenden Ansprüche, **dadurch gekennzeichnet, dass** die erste Formmulde (110) sich in einer ersten Raumrichtung (114) erstreckt und die zweite Formmulde (120) sich die erste Formmulde (110) im Durchdringungsbereich (102) kreuzend in einer zweiten Raumrichtung (124) erstreckt.

5. Aufnahmewerkzeug (100) nach einem der vorhergehenden Ansprüche, **dadurch gekennzeichnet, dass** die erste (110) und zweite (120) Formmulde unterschiedlich, insbesondere zueinander spiegelsymmetrisch geformt sind.

6. Aufnahmewerkzeug (100) nach einem der vorhergehenden Ansprüche, **dadurch gekennzeichnet, dass** das erste (200) und/oder zweite (300) Formteil als Innenverkleidungsbauteil oder Haut eines Innenverkleidungsbauteils eines Kraftfahrzeugs ausgebildet ist, wobei das Innenverkleidungsbauteil insbesondere eine Instrumententafel, ein Handschuhfach oder einer Verkleidung einer A-, B- oder C-Säule eines Kraftfahrzeugs ist.

7. Aufnahmewerkzeug (100) nach Anspruch 6, **dadurch gekennzeichnet, dass** das erste Formteil (200) als Innenverkleidungsbauteil oder Haut eines Innenverkleidungsbauteils eines rechtsgelenkten Kraftfahrzeugs und das zweite Formteil (300) als Innenverkleidungsbauteil oder Haut eines Innenverkleidungsbauteils eines linksgelenkten Kraftfahrzeugs ausgebildet sind.

8. Vorrichtung zur Bearbeitung eines ersten (200) und zweiten (300) Formteils, mit:
einem Aufnahmewerkzeug (100) nach einem der vorhergehenden Ansprüche; und
einer Bearbeitungseinrichtung zum Einbringen einer vorbestimmten Schwächungslinie (202) in das erste (200) und/oder zweite (300) Formteil im Aufnahmewerkzeug (100), wobei insbesondere die Schwächungslinie (202) als Sollbruchstelle für einen vom Formteil (200, 300) aufzunehmenden Airbag dient.

9. Vorrichtung nach Anspruch 8 wenn abhängig von Anspruch 2, **dadurch gekennzeichnet, dass** die Bearbeitungseinrichtung ausgebildet ist, die Schwächungslinie (202) in einem vorbestimmten Abstand zu einer Außenfläche des ersten Formteils (200) einzubringen, welche im ersten Anlegebereich (111) an der ersten Formmulde (110) anliegt.

10. Vorrichtung nach Anspruch 8 oder 9, **dadurch gekennzeichnet, dass** die Bearbeitungseinrichtung eine CNC-gesteuerte Schneidklinge oder einen CNC-gesteuerten Fräskopf zum Einbringen der vorbestimmten Schwächungslinie (202) aufweist.

11. Verfahren zur Bearbeitung eines ersten (200) und zweiten (300) Formteils, mit folgenden Verfahrensschritten:
Bereitstellen eines Aufnahmewerkzeugs (100) mit einer ersten (110) und zweiten (120) Formmulde, welche einander in einem Durchdringungsbereich (102) teilweise durchdringen; Aufnehmen des ersten Formteils (200) in der ersten Formmulde (110);
Bearbeiten des ersten Formteils (200) in einem ersten Anlegebereich (111) der ersten Formmulde (110), in welchem das erste Formteil (200) flächig anliegt;
Entnehmen des ersten Formteils (200), um den Durchdringungsbereich (102) freizugeben;
Aufnehmen des zweiten Formteils (300) in der zweite Formmulde (120); und
Bearbeiten des zweiten Formteils (300) in einem ersten Anlegebereich (121) der zweiten Formmulden (120), in welchem das zweite Formteil (300) flächig anliegt.

12. Verfahren nach Anspruch 11, **gekennzeichnet durch**:
Flächiges Anlegen des ersten Formteils (200) in einem zweiten Anlegebereich (112) der ersten Formmulde (110), wobei der erste (111) und zweite (112) Anlegebereich der ersten Formmulde (110) auf gegenüberliegenden Seiten des Durchdringungsbereichs (102) ausgebildet sind; und/oder Flächiges Anlegen des zweiten Formteils (300) in einem zweiten Anlegebereich (122) der zweiten Formmulde (120), wobei der erste (121) und zweite (122) Anlegebereich der zweiten Formmulde (120) auf gegenüberliegenden Seiten des Durchdringungsbereichs (102) ausgebildet sind.

13. Verfahren nach Anspruch 11 oder 12, **dadurch gekennzeichnet, dass** das Bearbeiten des ersten (200) und/oder zweiten (300) Formteils durch Einbringen einer vorbestimmten Schwächungslinie (202) in das erste (200) bzw. zweite (300) Formteil erfolgt.

14. Verfahren nach Anspruch 13, **dadurch gekennzeichnet,**
**dass** die Schwächungslinie (202) in einem vorbestimmten Abstand zu einer Außenfläche des ersten Formteils (200) eingebracht wird, welche im Anlegebereich (111) der ersten Formmulde (110) anliegt; und/oder
**dass** die Schwächungslinie (202) in einem vorbestimmten Abstand zu einer Außenfläche des zweiten Formteils (300) eingebracht wird, welche im Anlegebereich (121) der zweiten Formmulde (112) anliegt.

15. Verfahren nach einem der Ansprüche 11 bis 14, **gekennzeichnet durch**:
Bilden des ersten Formteils (200) **durch** Aufbringen eines Formteilmaterials in eine erste Form; und
Bilden des zweiten Formteils (300) **durch** Aufbringen eines Formteilmaterials in eine zweite Form, welche abweichend von der ersten Form, insbesondere spiegelsymmetrisch zur ersten Form, geformt ist.
